# FASCICULE DE BREVET EUROPEEN

(11) **EP 0 983 529 B1**
(45) Date de publication et mention de la délivrance du brevet: **13.03.2002**
(21) Numéro de dépôt: 98917518.7
(22) Date de dépôt: 14.05.1998
(51) Int. Cl.: G02C 5/00

(54) **MONTURE DE LUNETTES A ELEMENTS EN ALLIAGE SUPERELASTIQUE**
BRILLENFASSUNG MIT ELEMENTEN AUS SUPERELASTISCHER LEGIERUNG
FRAME FOR SPECTACLES WITH ELEMENTS IN EXTRA-RESILIENT ALLOY

(30) Priorité: 20.05.1997 FR 9706406
(43) Date de publication de la demande: 08.03.2000
(73) Titulaire: A. Lu. Tec. Association Lunetiere Technologique, 39400 Morez (FR)
(72) Inventeur: LARRUE, Denis, F-39400 Longchaumois (FR)
(74) Mandataire: Moinas, Michel
(86) Numéro de dépôt international: IB9800726
(87) Numéro de publication internationale: WO9853359

(56) Documents cités:
- EP-A- 0 187 937
- EP-A- 0 648 856
- WO-A-87/07961
- WO-A-96/24086
- DE-A- 3 307 442
- DE-C- 3 309 365
- FR-A- 2 504 284

## Description

La présente invention est relative à une monture de lunettes dont certains éléments, notamment les branches, la ou les barres de liaison entre les cercles retenant les verres ou les supports de plaquettes nasales sont en matériau dit à mémoire de forme présentant une superélasticité.

Par matériau à mémoire de forme, on entend tout alliage métallique susceptible de prendre une première forme en étant en une première phase cristalline martensitique à haute température et une seconde forme en étant en une seconde phase cristalline austénitique à basse température. Pour pouvoir passer ainsi d'un état à l'autre, le matériau présente une grande élasticité, voire une superélasticité, c'est-à-dire que sa valeur maximum de déformation élastique sans transformation plastique irréversible peut atteindre 6 %, voire 11 %, à l'inverse de la valeur de seulement 0,2 % usuelle pour les métaux communs.

Cette caractéristique de superélasticité présente un intérêt pour la réalisation d'éléments de montures de lunettes. En effet, si le pont de raccordement de cercles de verres est réalisé en un tel matériau, la monture peut subir un écrasement sans se casser. Si la branche est réalisée en un tel matériau, on peut la tordre et la plier sans risque de rupture, au point que l'on peut même envisager de s'affranchir de la charnière la reliant à la façade constituée des cercles de verres assemblés par le pont.

Les brevets US 4 772 112 et US 4 896 955 décrivent des montures de lunettes comprenant des éléments en matériau superélastique à base d'alliage de Nickel et de Titane (Ti-Ni). Toutefois, le nickel peut provoquer des allergies au porteur d'une telle monture de lunettes. De plus, l'assemblage de ces éléments en alliage Ti-Ni avec d'autres éléments en métaux usuellement utilisés en lunetterie (Monel, Maillechort, Bronze, Cupro-Béryllium, aciers inoxydables ou alliages de titane) est particulièrement difficile à réaliser et s'avère peu fiable dans le temps.

Le brevet WO 96/24086 décrit l'utilisation d'alliage à mémoire de forme monocristallin choisi parmi les alliages à base de Cu : Cu-Zn-AI, Cu-Al-Ni ou Cu-AI-Be pour la réalisation d'éléments de montures de lunettes, notamment de branches, ou de ponts. De par leur structure monocristalline, ces alliages possèdent alors une capacité de déformation superélastique supérieure à 11 % entre -40°C et +80°C. Toutefois, avec une telle superélasticité, il devient impossible de donner à ces éléments la moindre forme par des opérations de pliage ou de rétreint telles qu'usuellement pratiquées en lunetterie, la seule mise en forme possible étant sous contrainte et sous haute température, ce qui est particulièrement onéreux. De plus, de telles montures de lunettes deviennent caoutchouteuses au point de ne plus tenir correctement les verres de correction de la vue en position exacte devant les yeux. Il en résulte des risques d'aberrations visuelles pour le porteur, notamment dans le cas de verres correcteurs à double foyer.

Le but de la présente invention est une monture de lunettes à éléments superélastiques qui puisse être courbée et pliée de manière répétitive aux endroits désirés, voire momentanément écrasée, et ceci sans se briser ni conserver de déformation permanente ; mais qui puisse également tenir fermement des verres correcteurs en position exacte devant les yeux.

Ces buts sont atteints grâce à une monture de lunettes dont au moins un élément est réalisé en alliage de Cuivre-Aluminium-Béryllium (Cu-AI-Be) polycristallin de limite élastique comprise entre 3 et 6 %, de préférence de l'ordre de 4 %, et dont la composition en poids de l'alliage polycristallin est de 0,5 % à 1 % de préférence 0,63 % de Béryllium, de 11 % à 12 % de préférence 11,8 % d'Aluminium, et le reste de Cuivre.

Avantageusement, la taille moyenne des grains de l'alliage polycristallin n'excède pas 0,12 mm.

La composition de l'alliage est telle qu'elle ne présente pratiquement aucun risque d'allergie avec la peau du porteur. En retenant volontairement une composition particulière sous une forme polycristalline de dimension de grains prédéfinie, on établit l'élasticité à une valeur suffisante pour supporter des courbures accidentelles sans toutefois prendre de déformation permanente et pour, simultanément, maintenir correctement des verres correcteurs devant les yeux.

Avantageusement alors, la mise en forme de l'élément Cu-Al-Be est effectuée par une ou plusieurs opérations de rétreint ou de matriçage à froid ne dépassant pas 5/100ème de millimètre de déformation par passe, soit 40 % de rétreint pour un fil.

Utilement, on effectue ensuite un traitement thermique dit de bétatisation à une température supérieure à celle de transformation allotropique de l'alliage de l'ordre de 650°C, suivi d'un refroidissement rapide pour relaxer les contraintes internes créées lors du rétreint ou du matriçage.

Grâce à la composition de l'alliage spécifiquement retenue, un formage par rétreint reste possible, certes en plusieurs passes. Outre le fait de pouvoir donner une forme à l'élément superélastique, on constate que cette opération améliore également son état de surface la faisant passer d'un état "peau d'orange", après dégraissage suite au tréfilage, en un état parfaitement lisse.

En alternative, la mise en forme de l'élément Cu-AI-Be peut être effectuée à chaud, notamment à une température supérieure à 650°C pendant un intervalle de temps inférieur à 15 secondes /gramme de matière à chauffer, de préférence de l'ordre de 1 seconde si l'élément a été préalablement chauffé, ou compris entre 10 et 15 secondes si l'élément n'a pas été préalablement chauffé. Cette mise en forme est alors suivie d'un refroidissement rapide à la température ambiante.

Avantageusement alors, l'assemblage de l'élément Cu-Al-Be peut être effectué, par exemple, contre une pièce en Monel, par brasage avec un métal d'apport à base d'argent sous forme de pâte ou de fil à une température de l'ordre de 700°C à l'aide d'un chauffage par induction ou par résistance, particulièrement bien adaptés au domaine de la lunetterie du fait qu'il permet une chauffe locale bien maîtrisée.

Après de nombreux essais en atelier, on s'est rendu compte que de telles soudures par brasage permettent d'assembler les extrémités des ponts arqués parallèlement contre des cercles de verres, mais également d'assembler ces extrémités en bout orthogonalement à ces cercles.

Avantageusement, l'élément Cu-Al-Be subit un traitement galvanique d'apport d'une couche superficielle de Cuivre ou de Nickel, sans relation particulière avec le traitement galvanique des autres pièces de la monture, de telle sorte qu'un dépôt ultérieur sur cette couche d'accroche d'or, ou tout autre revêtement final (or ou palladium) classiquement utilisé en lunetterie, soit parfaitement uniforme.

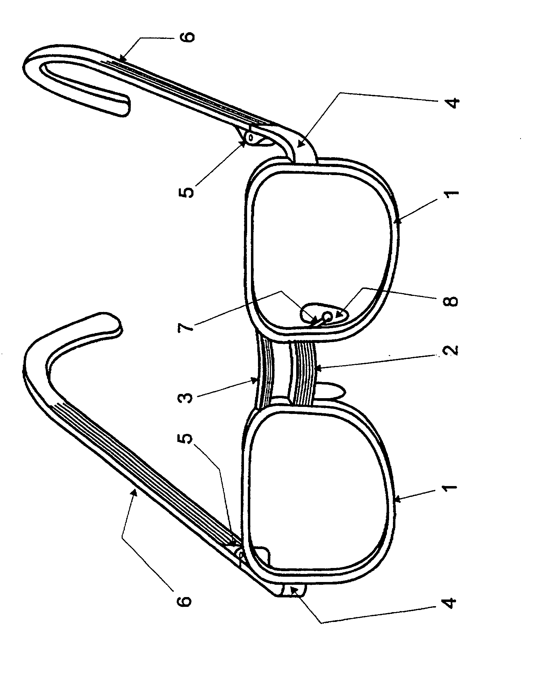

L'invention sera mieux comprise à la lecture de la description ci-dessous d'un mode de réalisation pris à titre nullement limitatif et en relation avec la figure annexée représentant une monture de lunettes.

Comme illustré sur la figure, une monture de lunettes comprend deux cercles 1 de support de verres correcteurs ou solaires en verre ou en matière organique. Dans l'exemple illustré, ces cercles sont tenus ensemble par deux ponts droits 2 et 3, l'ensemble formant une façade de monture de lunettes. L'un des ponts 2 peut, par exemple, être plus important que l'autre 3. De chaque côté de la façade est rapporté un tenon de façade coudé dont l'extrémité externe porte un charnon, usuellement femelle, d'une charnière 5 de liaison d'une branche latérale 6 à la façade. Par ailleurs, une tige en U soudée au pont 2 ou une paire de tiges 7 soudées directement contre chacun des cercles 1 supporte une paire de patins d'appui 8 de la monture sur le nez du porteur.

Plus particulièrement selon l'invention, les ponts 2, 3 de façade et les branches latérales 6 sont réalisés en un alliage métallique polycristallin comprenant 0,5 % à 1 % de préférence 0,63 % de Béryllium, de 11 % à 12 % de préférence 11,8 % d'Aluminium, et le reste de Cuivre ; et ceci en des grains de taille moyenne inférieure à 0,12 mm. Cette composition particulière sous forme polycristalline de grains moyens présente alors une caractéristique de superélasticité précise comprise entre 3 % et 6 %, par exemple, plutôt de 4 %, pour les ponts 2 et pour les branches 6.

Un tel alliage présente alors une masse volumique de 7,2 g/cm³, un allongement à la rupture A de l'ordre de 10 % et une température de fusion qui sont comparables aux alliages utilisés de manière classique en lunetterie, mais une charge à la rupture Rm de l'ordre de 1 000 Mpa, une limite élastique à température ambiante de l'ordre de 4 % et une contrainte de seuil élastique σₒ (0,2) de l'ordre de 500 Mpa, bien supérieures aux valeurs des alliages classiques, ce qui se traduit par une meilleure rigidité du matériau, donc par une meilleure tenue de la monture. Grâce à son domaine élastique très supérieur, pratiquement 20 fois supérieur à celui des alliages classiques, cet alliage Cu-AI-Be répond à deux exigences lunetières antinomiques : une élasticité de déformation d'esquive déjà sous une faible contrainte, mais une bonne rigidité en l'absence de toute contrainte.

Le choix de l'élasticité pour les ponts permet donc de momentanément écraser la façade sans qu'elle ne se rompe, tout en assurant un maintien suffisamment rigide entre les cercles pour que les verres restent bien en face des yeux du porteur. Le choix de l'élasticité des branches permet de les courber vers le haut ou vers le bas, également en cas d'accident, sans risque de rupture au niveau des charnières 5 ou des tenons 4, notamment en leur liaison avec la façade. Cette superélasticité de branche trouve également son avantage au niveau des extrémités courbées vers le bas qui sont alors suffisamment flexibles pour venir épouser toute forme de creux d'oreille, mais suffisamment rigides pour accrocher effectivement la monture au visage du porteur. Si désiré, les tiges 7 de support de patins 8 peuvent également être en alliage Cu-Al-Be faisant que ces supports agissent un peu comme des amortisseurs entre le nez et le poids de la façade.

La température de transformation austénitique Aₛ est de l'ordre de -100°C, à plus ou moins 10°C près, ce qui permet de situer la limite du domaine de stabilité de cette phase austénitique à une température inférieure au domaine normal d'utilisation des montures de lunettes prévue pour -30°C - +80°C. Par ailleurs, cet alliage présente un module d'Young de l'ordre de 70 Gpa et une dureté Vickers Hv de l'ordre de 300.

L'alliage superélastique est obtenu brut de fonderie sous la forme de fil qui peut ensuite être transformé en fils de différents diamètres communément compris entre 1 mm et 2 mm (1-2 mm) et de différentes formes transversales (circulaire, rectangulaire, etc.) dans des filières. Le fil ainsi obtenu est ensuite dégraissé électrochimiquement pour enlever le cimentage superficiel de graphite utilisé pour faciliter les opérations de tréfilage. Le fil présente alors une surface légèrement granuleuse, dite "en peau d'orange".

Un tronçon de fil découpé, ayant la superélasticité fixée à une valeur bien prédéterminée citée précédemment, peut alors subir une opération de rétreint ou de matriçage mécanique à basse température pour lui donner sa forme définitive, par exemple, dans le cas d'une branche pour former une extrémité plus épaisse avec un chamon mâle de charnière.

Il s'est avéré préférable d'effectuer ce formage par rétreint en plusieurs passes, chacune n'excédant pas 5/100 mm de déformation (n'excédant pas 40 % de rétreint), valeur au-dessus de laquelle la pièce risque d'éclater. Ce formage peut être effectué directement par mise en forme à chaud, ou à froid. La relaxation des contraintes ainsi créées est obtenue par un traitement dit de bétatisation à une température supérieure à 650°C pendant un temps relativement court. Un meilleur résultat est obtenu avec un traitement thermique à 860°C pendant 10 à 15 secondes selon la masse à chauffer et un refroidissement rapide, par exemple, par immersion dans de l'eau froide (20°C) ou sous jet d'air.

Incidemment, cette opération de rétreint a l'avantage de lisser la surface en faisant disparaître la granulosité superficielle due au dégraissage.

On peut également réaliser une mise en forme à chaud pour obtenir en une seule passe par matriçage ou pliage du fil une pièce de forme définitive assez complexe, par exemple, un pont coudé ou une branche coudée en une extrémité et se terminant en l'autre extrémité directement en un tenon courbé de liaison latérale à la façade.

Il convient alors d'effectuer ce traitement à une température supérieure à 650°C pour bien conserver l'homogénéité de la phase austénitique de l'alliage et éviter la formation de martensite sous contrainte ou la précipitation de composés intermétalliques (phase γ2). De préférence, ce traitement est réalisé de manière rapide pour éviter un grossissement des grains, ce qui modifierait les caractéristiques attendues de l'alliage.

A titre d'exemple, un pont mis en forme à une température de 860°C après un chauffage d'environ 13 secondes, puis refroidi rapidement par immersion dans l'eau présente alors, selon son diamètre, une superélasticité comprise entre 2 % et 10 %, une limite élastique σ₀ (0,2) comprise entre 400 Mpa et 500 Mpa, une charge à la rupture comprise entre 750 Mpa et 900 Mpa et un allongement à la rupture compris entre 15 % et 20 %. La taille moyenne des grains est alors de l'ordre de 0,12 mm.

Les ponts 2 et 3 sont reliés aux cercles 1 directement par brasage de préférence avec un apport de brasure à base d'argent. La technique de brasage à induction est particulièrement adaptée, car elle permet une chauffe locale maîtrisée. En particulier, la bonne conductivité électrique de cet alliage permet de limiter la durée de la chauffe. La protection gazeuse est nécessaire, par exemple, dans un environnement d'ammoniac craqué, et un refroidissement rapide doit être privilégié. Ces précautions opératoires doivent être d'autant plus respectées que le diamètre du fil est faible, notamment inférieur à 1,6 mm. Des essais en atelier ont montré que ces soudures par brasage supportent alors des contraintes en traction de 600 Mpa. Or, ces valeurs de contraintes ne peuvent pratiquement jamais apparaître au niveau des brasures du fait que, bien avant, les ponts superélastiques ont fléchi complètement et sans déformation résiduelle.

De préférence, chaque composant de la monture, et notamment ceux en alliage superélastique selon l'invention, reçoivent un traitement galvanique de dépôt d'une couche superficielle de Cuivre ou de Nickel nivelant. Cette couche sert de base uniforme dans toute la monture pour un dépôt de métal précieux de décoration, notamment de l'or. La composition de l'alliage superélastique facilite donc ce revêtement permettant d'intégrer sans difficulté la pièce superélastique dans un ensemble décoratif.

De nombreuses améliorations peuvent être apportées à ces éléments de monture de lunettes dans le cadre des revendications.

## Revendications

1. Monture de lunettes, dont au moins un élément (2,3,6) est réalisé en alliage de cuivre-aluminium-béryllium (Cu-Al-Be) polycristallin d'élasticité comprise entre 3 et 6 %, de préférence de l'ordre de 4 %, **caractérisée en ce que** la composition de l'alliage polycristallin est de 0,5 % à 1 %, de préférence 0,63 % de béryllium, de 11 % à 12 %, de préférence 11,8 % d'aluminium et le reste de cuivre.

2. Monture de lunettes selon la revendication 1, **caractérisée en ce que** la taille moyenne des grains de l'alliage polycristallin est inférieure à 0,12 mm.

3. Méthode de réalisation d'une monture de lunettes selon l'une des revendications 1 ou 2, **caractérisée en ce que** la mise en forme de l'élément Cu-Al-Be est effectuée par une ou plusieurs opérations de rétreint ne dépassant pas 5/100ème de millimètre de déformation par passe, ou 40 % de rétreint.

4. Méthode de réalisation d'une monture de lunettes salon la revendication 3, **caractérisée en ce que** l'élément Cu-Al-Be subit après une opération de rétreint un traitement thermique à une température supérieure à celle de transformation allotropique de l'alliage de l'ordre de 650°C, suivi d'un refroidissement rapide.

5. Méthode de réalisation d'une monture de lunettes selon l'une des revendications 1 ou 2, **caractérisée** en ca que la mise en forme de l'élément Cu-Al-Be est effectuée à une température supérieure à 650°C à l'issue d'un temps de chauffage inférieur à 15 secondes, par gramme de matière à chauffer, cette mise en forme étant suivie d'un refroidissement rapide à la température ambiante.

6. Méthode de réalisation d'une monture de lunettes selon l'une des revendications 1 ou 2, **caractérisée en ce que** l'assemblage de l'élément Cu-Al-Be est effectué contre une autre pièce par brasage avec un métal d'apport à base d'argent sous forme de pâte ou de fil à une température de l'ordre de 700°C à l'aide d'un chauffage local par induction.

7. Monture de lunettes selon la revendication 1, **caractérisée en ce que** l'élément Cu-Al-Be reçoit un traitement galvanique d'apport d'une couche superficielle de cuivre ou de nickel pour être ensuite revêtu d'or ou de palladium ou autre métal chimiquement inerte avec la peau.

## Claims

1. A Frame for spectacles comprising at least one element (2,3,6) made of a polycrystalline Copper-Aluminium-Beryllium (Cu-Al-Be) alloy of elasticity comprised between 3 and 6%, preferably of the order of 4%, in which the composition of the polycrystalline alloy is from 0.5% to 1%, preferably 0.63% Beryllium, from 11% to 12%, preferably 11.8% Aluminium, and the remainder Copper.

2. A Frame for spectacles according to claim 1, **characterized in that** the mean grain size of the polycrystalline alloy is less than 0.12 mm.

3. A Method of making a frame for spectacles according to claim 1 or 2, **characterized in that** the Cu-Al-Be element is shaped by one or more hammering operations not exceeding 5/100 mm of deformation per passage, or 40% shrinkage.

4. A Method of making a frame for spectacles according to claim 3, **characterized in that** after a shrinkage operation the Cu-Al-Be element undergoes a thermal treatment at a temperature exceeding the allotropic transformation temperature of the alloy, of the order of 650°C, followed by rapid cooling.

5. A Method of making a frame for spectacles according to claim 1 or 2, **characterized in that** the shaping of the Cu-Al-Be element is carried out at a temperature above 650°C after a heating time less than 15 seconds per gram of material to be heated, this shaping being followed by rapid cooling to ambient temperature.

6. A Method of making a frame for spectacles according to claim 1 or 2, **characterized in that** the Cu-Al-Be element is assembled to another part by brasing with a silver-based solder in paste or wire form, at a temperature of the order of 700°C using local induction heating.

7. A Frame for spectacles according to claim 1, **characterized in that** the Cu-Al-Be element is plated with a surface layer of Copper or Nickel by a galvanic treatment and then coated with gold or palladium or another metal inert to the skin.

## Patentansprüche

1. Brillengestell, bei dem wenigstens ein Bauteil (2, 3, 6) aus einer polykristallinen Kupfer-Aluminium-Beryllium-(Cu-Al-Be-) Legierung mit einer Elastizität zwischen 3 und 6 %, vorzugsweise um 4 % hergestellt ist, **dadurch gekennzeichnet, dass** die Zusammensetzung der polykristallinen Legierung 0,5 % bis 1 %, vorzugsweise 0,63 % Beryllium, 11 % bis 12 %, vorzugsweise 11,8 % Aluminium und der Rest Kupfer ist.

2. Brillengestell nach Anspruch 1, **dadurch gekennzeichnet, dass** die mittlere Korngröße der polykristallinen Legierung kleiner als 0,12 mm ist.

3. Verfahren zur Herstellung eines Brillengestelles nach Anspruch 1 oder 2, **dadurch gekennzeichnet, dass** die Formgebung des Cu-Al-Be-Bauteiles durch einen oder mehrere Bearbeitungsschritte mit Querschnittsverminderung, die bei jedem Schritt nicht mehr als den 5/100 Teil eines Millimeters oder 40 % an Querschnittsverminderung überschreitet, durchgeführt wird.

4. Verfahren zur Herstellung eines Brillengestelles nach Anspruch 3, **dadurch gekennzeichnet, dass** das Cu-Al-Be-Bauteil nach einem Bearbeitungsschritt mit Querschnittsverminderung einer thermischen Behandlung mit einer Temperatur, die höher als die bei der allotropen Umwandlung der Legierung von etwa 650°C ist, gefolgt von einer schnellen Abkühlung unterzogen wird.

5. Verfahren zur Herstellung eines Brillengestelles nach Anspruch 1 oder 2, **dadurch gekennzeichnet, dass** die Formgebung des Cu-Al-Be-Bauteiles bei einer Temperatur von mehr als 650 °C mit einer Erwärmungszeit von weniger als 15 Sekunden pro Gramm zu erwärmenden Material durchgeführt wird, wobei diese Formgebung von einer schnellen Abkühlung auf Umgebungstemperatur gefolgt wird.

6. Verfahren zur Herstellung eines Brillengestelles nach Anspruch 1 oder 2, **dadurch gekennzeichnet, dass** der Zusammenbau des Cu-Al-Be-Bauteiles mit einem weiteren Teil durch Löten mit einem silberhaltigen Lötmetall in Form einer Paste oder eines Drahtes bei einer Temperatur von etwa 700 °C mittels lokaler Erwärmung durch Induktion erfolgt.

7. Verfahren zur Herstellung eines Brillengestelles nach Anspruch 1, **dadurch gekennzeichnet, dass** das Cu-Al-Be-Bauteil eine galvanische Überzugsbehandlung mit einer Oberflächenschicht von Kupfer oder Nickel, die anschließend mit die Gold oder Palladium oder einem anderen mit der Haut chemisch inerten Metall bedeckt wird, erhält.
